Europäisches Patentamt

European Patent Office

Office européen des brevets

(19)

(11) Veröffentlichungsnummer: **0 102 359 B2**

(12) **NEUE EUROPÄISCHE PATENTSCHRIFT**

(45) Veröffentlichungstag der neuen Patentschrift:
27.11.91 Patentblatt 91/48

(51) Int. Cl.$^5$: **F28D 19/00, F28F 21/06**

(21) Anmeldenummer: **83900712.7**

(22) Anmeldetag: **25.02.83**

(86) Internationale Anmeldenummer:
**PCT/EP83/00053**

(87) Internationale Veröffentlichungsnummer:
**WO 83/02997 01.09.83 Gazette 83/20**

(54) **SPEICHERMATERIAL FÜR WÄRMEÜBERTRAGUNG.**

(30) Priorität: **27.02.82 DE 3207213**

(43) Veröffentlichungstag der Anmeldung:
**14.03.84 Patentblatt 84/11**

(45) Bekanntmachung des Hinweises auf die Patenterteilung:
**29.05.85 Patentblatt 85/22**

(45) Bekanntmachung des Hinweises auf die Entscheidung über den Einspruch:
**27.11.91 Patentblatt 91/48**

(84) Benannte Vertragsstaaten:
**AT GB NL**

(56) Entgegenhaltungen:
**EP-A- 0 007 166**
**EP-A- 0 044 561**
**CH-A- 334 078**
**DE-A- 2 414 662**
**DE-A- 2 414 663**
**DE-A- 2 645 742**
**DE-A- 2 751 115**
**DE-B- 1 101 460**
**DE-C- 848 508**
**DE-C- 920 425**

(56) Entgegenhaltungen:
**DE-U- 7 010 210**
**FR-A- 2 103 583**
**FR-A- 2 318 397**
**FR-A- 2 337 299**
**GB-A- 1 188 981**
**"Wiederaufheizung von Rauchgasen aus einer nach dem Bischoff-Verfahren arbeitenden Entschwefelungsanlage mit Regenerativ-Gasvorwärmer" von Gellersen und Mukherjee, Internat. Recycling Congress 1979 Berlin**
**Kunststoff-Taschenbuch 1974, S. 302, 303**
**Informationsblatt PW-3 der Fa. Branson, 1975**

(73) Patentinhaber: **Kraftanlagen AG.**
**Im Breitspiel 7**
**W-6900 Heidelberg 1 (DE)**

(72) Erfinder: **FRAUENFELD, Martin**
**Mühltalstrasse 18**
**W-6900 Heidelberg (DE)**
Erfinder: **VON WEDEL, Rüdiger**
**Ortsstrasse 16**
**W-6901 Heiligkreuzsteinach-Eiterbach (DE)**

(74) Vertreter: **Helber, Friedrich G., Dipl.-Ing.**
**Zenz, Helber & Hosbach Patentanwälte**
**Scheuergasse 24**
**W-6144 Zwingenberg (DE)**

EP 0 102 359 B2

## Beschreibung

Die Erfindung betrifft ein Speichermaterial für zur Wiederaufheizung der in einer Naßreinigungsstufe gereinigten Kasselabgase durch Wärmeübertragung von den der Naßreinigung zuzuführenden ungereinigten Kesselabgasen bestimmte umlaufende Regenerativ-Wärmetauscher, welches abstandhaltende, leisteförmige Profilelemente und durch Extrusion hergestellte, als Speicherelemente dienende plattenförmige Profilelemente aus thermoplastischem Kunststoffmaterial aufweist, wobei die plattenförmigen Profilelemente mit den leistenförmigen Profilelementen zu Speicherblöcken zusammengesetzt sind.

Metallische und keramische Werkstoffe werden als Speichermaterial in umlaufenden Regenerativ-Wärmetauschern für Kessel- und Klimaanlagen sowie für fahrbare und ortsfeste Gasturbinen eingesetzt. Dabei ist ein alter Vorschlag bekannt, nichtmetallische, die Wärme schlecht leitende Werkstoffe, wie Kunststoffe, Asbest, Papier oder Textilien im Niedertemperaturbereich - je nach Arbeitstemperatur im speziellen Anwendungsfall - auszuwählen, um diese Werkstoffe vornehmlich in Klimaanlagen für den Wärmetausch zwischen Raumab- und -zuluft einzusetzen (CH-PS 334 078). Insbesondere auf dem Arbeitsgebiet der Klima- und Lüftungstechnik wurden Kunststoffe für Formkörper vorgeschlagen, um diese nicht nur als Speichermaterial in Wärmetauschern, sondern auch als Einbauten in den Lüftern zuzuordnenden Schalldämpfern, in Wäschern für die Zuluft-Reinigung und -Befeuchtung sowie in Kühltürmen der Kälteanlagen für die Wasserverteilung und Abscheidung der Tropfen einzusetzen (DE-A 27 51 115). Die Gasdruchgangskanäle dieser Formkörper wurden durch entsprechende Formgebung vorzugsweise übereinstimmender Art bei Platten und Folien durch Prägen oder Pressen der Fläche für eine Abstandshaltung ausgebildet, wobei Rohre in den Vordergrund der Betrachtung gestellt wurden. Für den Aufbau des Formkörpers aus mehreren geformten Elementen wurden neben Verklebungen an den Berührungsstellen, welche gegebenenfalls Durchgangskanäle verschließen, und Randverschweißungen, die ungeprägte Randbereiche voraussetzen, zum Beispiel von Schrumpffolien gebildete Hüllen oder auch Spannbänder, vorgeschlagen.

Für den technischen Einsatz von Kunstoffen als Speichermaterial in Regenerativ-Wärmetauschern, die höheren Temperaturbeanspruchungen ausgesetzt sind, liegen keine speziellen Erfahrungen vor, obwohl natürlich die grundsätzlichen Eigenschaften der verschiedensten Kunststoffe hinsichtlich ihrer Verarbeitbarkeit im Spritzgußverfahren, ihrer Festigkeit und höchst zulässigen Dauergebrauchstemperatur, ihrer Wasseraufnahme u.dgl. aus der Literatur (z.B. "Kunststoff-Taschenbuch", 19. Ausgabe, Carl-Hanser-Verlag, München) entnehmbar sind. Aber selbst dann ist bei der Vielzahl der zur Verfügung stehenden Kunststoffe die Auswahl eines bestimmten Kunststoffs nicht ohne weiteres naheliegend, weil das Speichermaterial beim Einsatz im umlaufenden Regenerativ-Wärmetauschern für die Wiederaufheizung von in einer Naßwäsche entschwefelten Kesselabgasen über die Temperaturbeanspruchung hinaus besonderen betrieblichen Beanspruchungen unterworfen wird, im Hinblick auf welche die allgemeine Literatur über Kunststoffe keine speziellen Auswahlhilfen anbietet. Auf der bezüglich des Speichermaterials wärmeaufnehmenden Seite wird das Speichermaterials nämlich von höhertemperierten Rohgasen beaufschlagt, die nicht der nur unvollständig entstaubt sind und auf der wärmeabgebenden Seite von niedriger temperierten Gasen hoher Feuchte, die zuzätzlich Reste von chemischen Sorptions- und Neutralisationsmitteln und Produkte aus der Naßreinigung mit sich führen. Je nach der chemischen Zusammensetzung der innerhalb des Speichermaterials unter diesen Bedingungen beim Wärmetausch gebildete Niederschläge erfolgt in kürzerer oder längerer Zeit ein Aushärten der Niederschläge zu mehr oder weniger fest auf dem Speichermaterial haftenden, in der Regel in Wasser unlöslichen Verkrustungen, welche die Durchgangskanäle des Speichermaterials vollständig verschließen, so daß ein Weiterbetrieb des Wärmetauschers und im Gefolge damit auch der Kesselanlage nicht mehr möglich ist. Um stark verschmutzte und verkrustete Heizflächen - in üblicher Weise aus Stahl oder auch emailliertem Stahl - von Wärmetauschern in Nachschaltung zu Kesselanlagen zu reinigen, werden bereits besonders gestaltete Rußbläser eingesetzt, deren Reinigungsstrahlen das Speichermaterial im eingebauten Zustand reinigen, die Durchgangskanäle erneut öffnen und die festen Beläge zuverlässig und vollständig aus der Speichermasse des Wärmetauschers herausspülen. Die hierbei aus den Reinigungsdüsen der Rußbläser austretenden scharfen Reinigungsstrahlen führen zu örtlichen Verformungen, die in ihrer Gesamtheit eine walkartige Beanspruchung der plattenförmigen Bestandteile des Speichermaterials zur Folge haben. Andererseits sind gerade derartige walkartige Beanspruchungen in plattenförmig vorliegendem Speichermaterial in besonderem Maße dazu geeignet, auch fest auf dem Speichermaterial haftende Verkrustungen und Beläge abzusprengen.

Da umlaufende Regenerativ-Wärmetauscher mit metallischen Speichermaterialien sich unter den vorbezeichneten besonderen Betriebsbedingungen nur mit begrenzter Betriebszeit und nur unter stark erhöhtem Reinigungsaufwand einsetzen lassen, sind von der Patentinhaberin für diese Betriebsbedingungen als Alternative zu metallischen oder emaillierten Speichermaterialien versuchsweise solche aus Kunststoff untersucht worden, wobei über die Tatsache der grundsätzlichen Möglichkeit der Verwendung von Kunststoffen hinaus jedoch weder etwas über die Art der verwendeten Kunststoffe noch den strukturellen Aufbau des aus solchen Kunststoffen hergestellten Speichermaterials etwas bekanntgeworden ist. ("Wiederaufheizung von Rauchgasen aus einer nach dem Bischof-Verfahren arbeitenden Entschwefelungsanlage mit Regenerativ-Gasvorwärmer (Gavo)" von E.W. Gellersen und S.K. Mokherjee, Beitrag zum internationalen Recycling-Kongress, Oktober 1979, Berlin).

Der Erfindung liegt daher die Aufgabe zugrunde, ein Speichermaterial für den Einsatz in umlaufenden Regenerativ-Wärmetauschern anzugeben, welche zur Wiederaufheizung der in einer Naßreinigungsstufe gereinigten Schwefelabgase vorgesehen sind, wobei das Speichermaterial die Eigenschaften haben soll, daß es sich einfach und wirtschaftlich herstellen läßt, seine Oberfläche eine geringe Affinität zu den Abgasbestandteilen der Rohgase vor und der Reingase nach der Naßreinigung hat und eine hohe Zeitstandfestigkeit auch bei wechselnder Beanspruchung durch auftreffende Reinigungsstrahlen aufweist.

Erfindungsgemäß wird diese Aufgabe dadurch gelöst, daß die abstandhaltenden leistenförmigen Profile zum Anschlußbereich an die plattenförmigen Speicherelemente vorstehende, im Querschnitt dreieckförmige Stege aufweisen, welche in Längsrichtung der abstandhaltenden leistenförmigen Profile aufeinanderfolgend unterbrochen linienförmig oder unterbrochen linienförmig und im Bereich der Unterbrechungen mit Abstand zu den linienförmigen Stegen punktförmig sind, wobei die Stege durch linienförmige bzw. punktförmige Ultraschallschweißungen mit den plattenförmigen Speicherelementen verbunden sind, und daß die leistenförmigen und die plattenförmigen Profilelemente aus Thermoplasten der Gruppe der Polyphenylenoxide bestehen oder diese enthalten. Das in dieser Weise unter Verwendung von Profilelementen aus Polyphenylenoxid aufgebaute Speichermaterial hat sich als hinreichend beständig gegen die bei den hier in Frage stehenden Regenerativ-Wärmetauschern auftretenden Beanspruchungen erwiesen, wobei die Neigung zur Entstehung fest haftender Verbindungen der niedergeschlagenen Beläge mit den Oberflächen des Speichermaterials gering ist. Durch die Verbindung der abstandhaltenden leistenförmigen Profilelemente und der plattenförmigen Profilelemente im Ultraschall-Schweißverfahren mittels unterbrochener, im Querschnitt dreieckförmiger Stege - im Gegensatz zu den bei Ultraschall-Verschweißungen sonst verwendeten durchgehenden Stegen (Informationsblatt PW-3 der Firma BRANSON SONIC POWER COMPANY aus dem Jahre 1975) - wird dem Speichermaterial auch eine Abreinigung von in den Durchgangskanälen des Speichermaterials gebildeten fest haftenden Verkrustungen unterstützende Verformbarkeit erteilt.

Die Profilelemente können dabei aus einem Copolymerisat von Polyphenylenoxid und Polystyrol bestehen oder Anteile hiervon enthalten.

Auch ihre Herstellung aus Polyphenylenoxid-Polystyrol-Polyblends kommt in Frage.

Die Speichermasse umlaufender Regenerativ-Wärmetauscher wird in der Regel in sektorförmigen Räumen einer Tragkonstruktion untergebracht. Um diese Räume füllende Speicherblöcke auszubilden, sind die plattenförmigen Speicherelemente und die diese auf Abstand haltenden leistenförmigen Profile zweckmäßig abwechselnd aufeinandergeschichtet und schrittweise durch die Ultraschallschweißung miteinander zu einem Speicherblock verbunden.

Auf der einen Stirnseite des Speicherblocks weisen die punktförmigen Schweißverbindungen vorzugsweise einen größeren Abstand von dieser Stirnseite auf, als auf der gegenüberliegenden Stirnseite, an welcher die Verbindungen zwischen plattenförmigen Speicherelementen und abstandhaltenden, leistenförmigen Profilen jeweils mit einer punktförmigen Schweißverbindung enden. Auf diese Art wird die spätere Eintrittsseite des Reinigungsstrahls eine quasi gelenkige Einspannung der plattenförmigen Speicherelemente in den jeweiligen Feldern zwischen den abstandhaltenden Profilen erhalten, welche die zum Absprengen der Verkrustungen vorteilhaften Walkbewegungen zuläßt.

Um einen unsymmetrischen Verzug des Speicherblocks bei der Fertigung aufgrund des schrittweisen Ablaufs der einzelnen Schweißvorgänge zu vermeiden, wird auf der Seite des Speicherblocks, an welcher die punktförmigen Scheißverbindungen einen größeren Abstand von der Stirnseite aufweisen, zwischen der punktförmigen Schweißverbindung und der Stirnseite eine Heftschweißung in Form einer linienförmigen Schweißnaht geringerer Länge vorgesehen, welche jeweils eine Sollbruchstelle für einen schwingungsfähigen Eintrittsabschnitt der Speicherelemente im betrieblichen Einsatz des Speicherblocks bildet.

Für die Fertigung sektorförmiger Speicherblöcke in Anpassung an die Sektorräume der Tragkonstruktion umlaufender Regenerativ-Wärmetauscher wird zweckmäßig ein Speicherblock oder werden mehrere aneinandergereihte Speicherblöcke in die sektorförmigen Räume der Speichermaterial-Tragkonstruktion passend zugeschnitten.

Um die Eintrittsabschnitte der plattenförmigen Speicherelemente der einzelnen Speicherblöcke besonders schwingungsfähig auszubilden, wird für das plattenförmige Speicherelement eine Stärke von 1 bis 3 mm, vorzugsweise 1,5 mm, gewählt, während der Speicherblock eine Höhe von $\geqq$ 100 mm hat.

Des weiteren empfiehlt es sich, die abstandhaltenden, leistenförmigen Profile mit einer Teilung von 20 bis 90 mm, vorzugsweise 50 mm, anzuordnen, wobei deren Abmessungen über die Staghöhe 3 bis 6 mm, vorzugsweise 4 mm, und deren Breite 4 bis 6 mm, vorzugsweise 5 mm, beträgt.

Die Abstände zwischen aufeinanderfolgenden linienförmigen Schweißnähten wird zweckmäßig zwischen 8 bis 15 mm, vorzugsweise mit 12 mm bemessen, wobei die punktförmigen Schweißverbindungen über die Plattenhöhe mit einer Teilung von 50 bis 70 mm, vorzugsweise 60 mm, aufeinanderfolgen. Für die punktförmigen Schweißverbindungen ist es von Vorteil, wenn die leistenförmigen Profile zur Ausbildung von jeweils knopfartigen Anschlußbereichen eine ringförmige Verbreiterung mit beidseitig Kreisringförmigen, im Querschnitt dreieckförmigen stegen aufweisen.

Die knopfartig ausgebildeten Anschlußbereiche sind dabei auf einen Durchmesser zwischen 8 und 15 mm, vorzugsweise 10 mm, verbreitert, wobei dann die kreisringförmigen Stege einen Durchmesser zwischen 6 und 13 mm, vorzugsweise 7,5 mm, haben.

Neben der für den Grundwerkstoff bekannten Beständigkeit im Bereich höherer Temperaturen wird überraschenderweise eine Zeitstandfestigkeit des Speicherblocks unter betrieblichen Belastungen, und zwar insbesondere auch bezüglich der wechselnden Beanspruchungen der im Speicherblock enthaltenen plattenförmigen Speicherelemente durch die auftreffenden Reinigungsstrahlen erreicht, die nur geringfügig herabgesetzt ist. Wesentlich für dieses Verhalten sind die gelenkigen Verbindungen zwischen den plattenförmigen Speicherelementen und den abstandhaltenden, leistenförmigen Profilen.

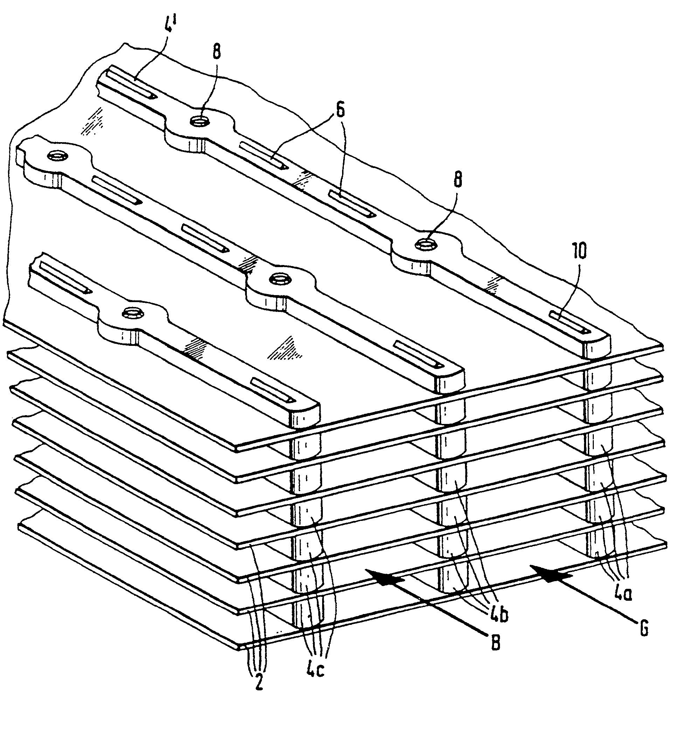

Zur Erläuterung der Erfindung ist in der Zeichnung ein Plattenstapel bei der Herstellung zum Speicherblock in Perspektive dargestellt.

Die Zeichnung zeigt einen Ausschnitt im Bereich eines Stapels von plattenförmigen Speicherelementen 2 mit zwischengeschalteten, abstandhaltenden, leistenförmigen Profilen 4a, 4b, 4c, während der Fertigung des Speicherblocks.

In der Darstellung sind bereits sieben der plattenförmigen Speicherelemente 2 im Wechsel mit abstandhaltenden, leistenförmigen Profilen 4a, 4b, 4c in drei Reihen übereinander durch Ultraschallschweißung miteinander verbunden worden. Auf das oberste Speicherelement 2 des Plattenstapels ist bereits die nächstfolgende Lage der abstandhaltenden Profile 4' aufgesetzt worden. Für die Verschweißung mit dem nächstfolgenden (nicht gezeigten) Speicherelement sind die abstandhaltenden Profile 4' beidseitig, d. h. auch auf der nicht sichtbaren Unterseite mit den auf ihrer Oberseite dargestellten, sich in axialer Richtung erstreckenden, im Querschnitt dreieckförmigen Stegen 6 für linienförmige Schweißverbindungen einerseits und kreisringförmigen Stegen 8, für punktförmige Schweißverbindungen andererseits versehen. Vor der Ultraschallschweißung wird zunächst auf die oberste Lage der abstandhaltenden, leistenförmigen Profile das nächstfolgende plattenförmige Speicherelement aufgelegt. Die Ultraschallschweißung erfolgt somit schrittweise zugleich durch eine Fernschweißung zur Verbindung der Unterseite der leistenförmigen Profile 4' mit dem darunter befindlichen Speicherelement 2 und durch eine Nahschweißung zur Verbindung ihrer Oberseite mit dem noch auf sie aufzulegenden plattenförmigen Speicherelement.

Die abstandhaltenden Profile oder Stege sind im Bereich der vorgesehenen punktförmigen Schweißverbindungen ebenso wie die zu ihrer Durchführung vorgesehenen, in der Draufsicht kreisringförmigen und im Querschnitt dreieckförmigen Stege 8 jeweils mit abgerundeten Verbreiterungen versehen, so daß in diesen Bereichen besonders belastungsfähige, knopfartige Verbindungsbereiche gestaltet werden. In dem in der Zeichnung dargestellten Ausschnitt des Plattenstapels liegen die in der Zeichnung rechts dargestellten geradlinigen Stirnkanten der plattenförmigen Speicherelemente in der späteren Eintrittsfläche der staubbeladenen Gase, deren Strömungsrichtung durch den Pfeil G symbolisiert sein möge. In gleicher Richtung wirken die Reinigungsstrahlen des Rußbläsers, deren Wirkungsrichtung durch den Pfeil B veranschaulicht sein möge.

Die abstandhaltenden, leistenförmigen Profile 4a, 4b, 4c sind mit bezüglich dieser Eintrittsfläche zurückversetzten Verbreiterungen mit den in der Draufsicht kreisringförmigen Stegen für die punktförmigen Ultraschall-Schweißverbindungen versehen.

Unmittelbar an die Eintrittsfläche angrenzend sind gegenüber den anderen axial ausgerichteten Dreieckstegen 6 zur Herstellung der linienförmigen Schweißverbindungen kürzere im Querschnitt dreieckige Stege 10 vorgesehen. Diese Stege dienen allein als Montagehilfe. Sie fixieren den Plattenstapel bzw. den Speicherblock im Bereich der betreffenden Stirnseite und vermeiden dort eine Verformung aufgrund der schrittweise durchgeführten Ultraschallschweißung während der Herstellung des Speicherblocks aus Speicherplatten und abstandhaltenden, leistenförmigen Profilen.

## Patentansprüche

1. Speichermaterial für zur Wiederaufheizung der in einer Naßreinigungsstufe gereinigten Kesselabgase durch Wärmeübertragung von den der Naßreinigung zuzuführenden ungereinigten Kesselabgasen bestimmte umlaufende Regenerativ-Wärmetauscher, welches abstandhaltende, leistenförmige Profilelemente und durch Extrusion hergestellte, als Speicherelemente dienende plattenförmige Profilelemente aus thermoplastischem Kunststoffmaterial aufweist, wobei die plattenförmigen Profilelemente mit den leistenförmigen Profilelementen zu Speicherblöcken zusammengesetzt sind, **dadurch gekennzeichnet,**

daß die abstandhaltenden leistenformigen Profile (4a, 4b, 4c) zum Anschlußbereich an die plattenförmigen Speicherelemente (2) vorstehende, im Querschnitt dreieckförmige Stege (6; 10) aufweisen, welche in Längsrichtung der abstandhaltenden leistenförmigen Profile (4a, 4b, 4c) aufeinanderfolgend unterbrochen linienförmig oder unterbrochen linienförmig und im Bereich der Unterbrechungen mit Abstand zu den linienförmigen Stegen punktförmig sind, wobei die Stege durch linienförmige bzw. punktförmige Ultraschallschweißungen mit den plattenförmigen Speicherelementen (2) verbunden sind, und daß die leistenförmigen und die plattenförmigen Profilelemente aus Thermoplasten der Gruppe der Polyphenylenoxide bestehen oder diese enthalten.

2. Speichermaterial nach Anspruch 1, dadurch gekennzeichnet, daß die Profilelemente (2; 4a, 4b, 4c) aus einem Copolymerisat von Polyphenylenoxid und Polystyrol bestehen oder Anteile hiervon enthalten.

3. Speichermaterial nach Anspruch 1, dadurch gekennzeichnet, daß die Profilelemente (2; 4a, 4b, 4c) aus Polyphenylenoxid-Polystyrol-Polyblends hergestellt sind.

4. Speichermaterial nach einem der Ansprüche 1 bis 3, dadurch gekennzeichnet, daß die plattenförmigen Speicherelemente (2) und die abstandhaltenden, leistenförmigen Profile (4a, 4b, 4c) abwechselnd aufeinander geschichtet und schrittweise durch die Ultraschallschweißung miteinander zu einem Speicherblock verbunden sind.

5. Speichermaterial nach einem der Ansprüche 1 bis 4, dadurch gekennzeichnet, daß auf der einen Stirnseite des Speicherblocks die punktförmigen Schweißverbindungen einen größeren Abstand von dieser Stirnseite aufweisen als auf der gegenüberliegenden Stirnseite, an welcher die Verbindungen zwischen plattenförmigen Speicherelementen (2) und abstandhaltenden, leistenförmigen Profilen (4a, 4b, 4c) jeweils mit einer punktförmigen Schweißverbindung enden.

6. Speichermaterial nach Anspruch 5, dadurch gekennzeichnet, daß an der Stirnseite des Speicherblocks, an welcher die punktförmigen Schweißverbindungen einen größeren Abstand von der Stirnseite aufweisen, zwischen der punktförmigen Schweißverbindung und der Stirnseite eine Heftschweißung in Form einer linienförmigen Schweißnaht geringer Länge vorgesehen ist.

7. Speichermaterial nach einem der Ansprüche 1 bis 6 für einen umlaufenden Regenerativ-Wärmetauscher mit einer in sektorförmige Räume unterteilen Tragkonstruktion für das Speichermaterial, dadurch gekennzeichnet, daß ein Speicherblock oder mehrere aneinandergereihte Speicherblöcke in die sektorförmigen Räume der Speichermaterial-Tragkonstruktion passend zugeschnitten wird bzw. werden.

8. Speichermaterial nach einem der Ansprüche 4 bis 7, dadurch gekennzeichnet, daß die plattenförmigen Speicherelemente (2) eine Stärke von 1 bis 3 mm, vorzugsweise 1,5 mm, haben und der Speicherblock eine Höhe von $\geq$ 100 mm aufweist.

9. Speichermaterial nach Anspruch 8, dadurch gekennzeichnet, daß die abstandhaltenden, leistenförmigen Profile (4a, 4b, 4c) eine Teilung von 20 bis 90 mm, vorzugsweise 50 mm, aufweisen.

10. Speichermaterial nach Anspruch 8 oder 9, dadurch gekennzeichnet, daß die Stärke der leistenförmigen Profile (4a, 4b, 4c) über die Steghöhe 3 bis 6 mm, vorzugsweise 4 mm, und ihre Breite 4 bis 6 mm, vorzugsweise 5 mm, beträgt.

11. Speichermaterial nach Anspruch 1 und einem der Ansprüche 3 bis 10, dadurch gekennzeichnet, daß die Abstände zwischen aufeinanderfolgenden, linienförmigen Schweißnähten 8 bis 15 mm, vorzugsweise 12 mm, betragen.

12. Speichermaterial nach Anspruch 1 und einem der Ansprüche 9 bis 11, dadurch gekennzeichnet, daß die punktförmigen Schweißverbindungen über die Plattenhöhe mit einer Teilung von 50 bis 70 mm, vorzugsweise 60 mm, aufeinander folgen.

13. Speichermaterial nach Anspruch 12, dadurch gekennzeichnet, daß die leistenförmigen Profile (4a, 4b, 4c) zur Ausbildung von jeweils knopfartigen Anschlußbereichen der punktförmigen Schweißverbindungen eine ringförmige Verbreiterung mit beidseitig kreisringförmigen, im Querschnitt dreieckförmigen Stegen (8) aufweisen.

14. Speichermaterial nach Anspruch 13, dadurch gekennzeichnet, daß die knopfartig ausgebildeten Anschlußbereiche auf einen Durchmesser zwischen 8 und 15 mm, vorzugsweise 10 mm, verbreitert sind.

15. Speichermaterial nach Anspruch 14, dadurch gekennzeichnet, daß die kreisringförmigen Stege (8) einen Durchmesser zwischen 6 und 13 mm, vorzugsweise 7,5 mm, haben.

**Claims**

1. Accumulator for rotary regenerative heat exchangers intended for re-heating boiler exhaust gases cleaned in a wet cleaning stage by thermal transfer from the uncleaned boiler exhaust gases to be supplied to the wet cleaner, which includes strip-shaped spacer profile elements and plate-shaped profile elements of thermoplastic plastics material produced by extrusion and serving as accumulator elements, the plate-shaped profile elements being assembled with the strip-shaped profile elements into accumulator blocks, characterised in that the strip-shaped spacer profiles (4a,4b,4c) have ribs (6;10) of triangular cross-section projecting towards the connection region with the plate-shaped accumulator elements (2), which ribs, in the longitudinal direction of the strip-shaped spacer profiles (4a,4b,4c), have either the form of a successively interrupted line or a successively interrupted line in the interruption regions of which punctiform ribs are provided spaced from the linear ribs, whereby the ribs are connected to the plate-shaped accumulator elements (2) by linear or spot ultrasonic welds, and that the strip-shaped and the plate-shaped profile elements consist of thermoplastics from the group of the polyphenylene oxides or contain the latter.

2. Accumulator as claimed in claim 1, characterised in that the profile elements (2;4a,4b,4c) consist of a copolymerisate of polyphenylene oxide and polystyrol or contain proportions thereof.

3. Accumulator as claimed in claim 1, characterised in that the profile elements (2;4a,4b,4c) are produced from polyphenylene oxide-polystyrol polyblends.

4. Accumulator as claimed in one of claims 1 to 3, characterised in that the plate-shaped accumulator elements (2) and the strip-shaped spacer profiles (4a,4b,4c) are arranged alternately in layers on one another and are connected together to form an accumulator block incrementally by the ultrasonic welding.

5. Accumulator as claimed in one of claims 1 to 4, characterised in that the spot weld connections on the one end face of the accumulator block have a larger spacing from this end face than on the opposite end face at which the connections between plate-shaped accumulator elements (2) and strip-shaped spacer profiles (4a,4b,4c) each end with a spot weld connection.

6. Accumulator as claimed in claim 5, characterised in that at the end face of the accumulator block, at which the spot weld connections have a larger spacing from the end face, a tack weld in the form of a linear weld seam of small length is provided between the spot weld connection and the end face.

7. Accumulator as claimed in one of claims 1 to 6 for a rotary regenerative heat exchanger with a support construction for the accumulator divided into sector-shaped spaces, characterised in that an accumulator block or a plurality of adjacent connected accumulator blocks is or are cut to size to fit into the sector-shaped spaces of the accumulator support structure.

8. Accumulator as claimed in one of claims 4 to 7, characterised in that the plate-shaped accumulator elements (2) have a thickness of 1 to 3mm, preferably 1. 5mm and the accumulator block has a height of > 100mm.

9. Accumulator as claimed in claim 8, characterised in that the strip-shaped spacer profiles (4a,4b,4c) have a spacing of 20 to 90mm, preferably 50mm.

10. Accumulator as claimed in claim 8 or 9, characterised in that the thickness of the strip-shaped profiles (4a,4b,4c) over the rib height is 3 to 6mm, preferably 4mm, and their breadth is 4 to 6mm, preferably 5mm.

11. Accumulator as claimed in claim 1 and one of claims 3 to 10, characterised in that the spacing between successive linear weld seams is 8 to 15mm, preferably 12mm.

12. Accumulator as claimed in claim 1 and one of claims 9 to 11, characterised in that the spot weld connections follow one another over the plate height with a spacing of 50 to 70mm, preferably 60mm.

13. Accumulator as claimed in claim 12, characterised in that the strip-shaped profiles (4a,4b,4c) have annular broadenings with annular ribs of triangular cross-section on both sides to form button-like connecting regions of the spot weld connections.

14. Accumulator as claimed in claim 13, characterised in that the button-like connecting regions are broadened to a diameter of between 8 and 15mm, preferably 10mm.

15. Accumulator as claimed in claim 14, characterised in that the annular flanges (8) have a diameter between 6 and 13mm, preferably 7.5mm.

## Revendications

1. Dispositif accumulateur pour échangeurs de chaleur régénérateurs tournants destinés au réchauffage des fumées de chaudière épurées dans une étape d'épuration humide, par transmission de chaleur par les fumées de chaudière non épurées à conduire à l'épuration humide, lequel dispositif présente des éléments profilés d'entretoisement en forme de réglette en matière thermoplastique et des éléments profilés en forme de plaque également en matière thermoplastique fabriqués par extrusion et servant d'éléments accumulateurs, les éléments profilés en forme de plaque étant joints aux éléments profilés en forme de réglette pour la formation de blocs accumulateurs, caractérisé par le fait que les profilés d'entretoisement en forme de réglette (4a, 4b, 4c) présentent des nervures de section triangulaire (6; 10) saillant vers la zone de jonction aux éléments accumulateurs en forme de plaque (2) et qui sont linéaires interrompus en se suivant dans la direction longitudinale des profilés d'entretoisement en forme de réglette (4a, 4b, 4c) et/ou linéaires interrompues dans la zone des interruptions, sont ponctuelles à distance des nervures linéaires, ces nervures étant jointes aux éléments accumulateurs en forme de plaque (2) par des soudures aux ultrasons linéaires ou ponctuelles, et que les éléments profilés en forme de réglette et les éléments profilés en forme de plaque sont en thermoplastiques du groupe des polyphénylènoxydes ou contiennent de ceux-ci.

2. Dispositif accumulateur selon la revendication 1, caractérisé par le fait que les éléments profilés (2; 4a, 4b, 4c) sont constitués d'un copolymère d'oxyde de polyphénylènoxyde et de polystyrène ou contiennent des parties de celui-ci.

3. Dispositif accumulateur selon la revendication 1, caractérisé par le fait que les éléments profilés (2; 4a, 4b, 4c) sont faits d'un mélange de polyphénylènoxyde-polystyrène-polyblend.

4. Dispositif accumulateur selon l'une des revendications 1 à 3, caractérisé par le fait que les éléments accumulateurs en forme de plaque (2) et les profilés d'entretoisement en forme de réglette (4a, 4b, 4c) sont empilés en alternance et assemblés pas à pas en un bloc accumulateur par soudage aux ultrasons.

5. Dispositif accumulateur selon l'une des revendications 1 à 4, caractérisé par le fait que sur un côté frontal du bloc accumulateur, les joints de soudure ponctuels sont à une plus grande distance de ce côté frontal que sur le côté frontal opposé, sur lequel les joints entre éléments accumulateurs en forme de plaque (2) et profilés d'entretoisement en forme de réglette (4a, 4b, 4c) se terminent chacun par un joint de soudure ponctuel.

6. Dispositif accumulateur selon la revendication 5, caractérisé par le fait que sur le côté frontal du bloc accumulateur sur lequel les joints de soudure ponctuels sont à une plus grande distance du côté frontal, entre le joint de soudure ponctuel et le côté frontal est prévue une soudure d'attache formée d'un cordon de soudure linéaire de faible longueur.

7. Dispositif accumulateur selon l'une des revendications 1 à 6 pour un échangeur de chaleur régénérateur tournant comportant une construction de support du dispositif accumulateur divisée en espaces en forme de secteur, caractérisé par le fait qu'un bloc accumulateur ou plusieurs blocs accumulateurs placés les uns à côté des autres est ou sont taillé(s) de façon à s'ajuster dans les espaces en forme de secteur de la construction de support du dispositif accumulateur.

8. Dispositif accumulateur selon l'une des revendications 4 à 7, caractérisé par le fait que les éléments accumulateurs en forme de plaque (2) ont une épaisseur de 1 à 3 mm, de préférence de 1,5 mm, et le bloc accumulateur a une hauteur d'au moins 100 mm.

9. Dispositif accumulateur selon la revendication 8, caractérisé par le fait que les profilés d'entretoisement en forme de réglette (4a, 4b, 4c) ont un espacement de 20 à 90 mm, de préférence de 50 mm.

10. Dispositif accumulateur selon l'une des revendications 8 et 9, caractérisé par le fait que l'épaisseur des profilés en forme de réglette (4a, 4b, 4c), sur la hauteur des nervures, est de 3 à 6 mm, de préférence de 4 mm, et leur largeur est de 4 à 6 mm, de préférence de 5mm.

11. Dispositif accumulateur selon la revendication 1 et une des revendications 8 à 10, caractérisé par le fait que l'intervalle entre les cordons de soudure linéaires successifs est de 8 à 15 mm, de préférence de 12 mm.

12. Dispositif accumulateur selon la revendication 1 et une des revendications 8 à 11, caractérisé par le fait que les joints de soudure ponctuels se suivent sur la hauteur des plaques avec un espacement de 50 à 70 mm, de préférence de 60 mm.

13. Dispositif accumulateur selon la revendication 12, caractérisé par le fait que les profilés en forme de réglette (4a, 4b, 4c), pour la formation de zones de jonction du genre bouton des joints de soudure ponctuels, présentent un élargissement annulaire pourvu de nervures (8) de section triangulaire en forme de couronne circulaire des deux côtés.

14. Dispositif accumulateur selon la revendication 13, caractérisé par le fait que les zones de jonction du genre bouton sont élargies à un diamètre compris entre 8 et 15 mm et de préférence de 10 mm.

15. Dispositif accumulateur selon la revendication 14, caractérisé par le fait que les nervures en forme de couronne circulaire (8) ont un diamètre compris entre 6 et 13 mm et de préférence de 7,5 mm.